# EUROPÄISCHE PATENTANMELDUNG

(11) **EP 1 179 721 A2**
(43) Veröffentlichungstag der Anmeldung: **13.02.2002**
(21) Anmeldenummer: 01118677.2
(22) Anmeldetag: 03.08.2001
(51) Int. Cl.: F28D 9/00, H01M 8/04

(54) **Kombiniertes Bauteil aus Wärmeübertrager und Reaktor**

(30) Priorität: 08.08.2000 DE 10038523
(71) Anmelder: XCELLSIS GmbH, 73230 Kirchheim/Teck-Nabern (DE)
(72) Erfinder: Corneille, Marcel, 70619 Stuttgart (DE); Herzog, Jacques, 88167 Röthenbach Allgäu (DE); Klier, Michael, 72660 Beuren (DE); Koch, Christoph, 73230 Kirchheim (DE); Schönrock, Bernd, 73277 Owen / Teck (DE)
(74) Vertreter: Kocher, Klaus-Peter Dipl.-Phys

(57) **Zusammenfassung**

Kombiniertes Bauteil (1) aus einem Wärmeübertrager (5) und einem Reaktor (8), wobei der Wärmeübertrager (5) in Plattenbauweise ausgebildet ist, und zwischen aufeinanderfolgenden Platten (2) abwechselnd Strömungsräume für ein erstes und ein zweites Medium vorhanden sind. Die Platten des Wärmeübertragers (5) sind im wesentlichen ringförmig ausgebildet. Weiterhin weist der Wärmeübertrager (5) im wesentlichen senkrecht zu den Platten eine rohrförmige Außenwandung (10) sowie eine rohrförmige Innenwandung (7) auf, wobei der Reaktor (8) von der Innenwandung (7) des Wärmeübertragers (5) umschlossen ist. Das Produkt des Reaktors (8) wird durch Zuführungsöffnungen (9) an der Innenwandung (7) des Wärmeübertragers (5) in die Strömungsräume für eines der beiden Fluide im Wärmeübertrager (5) geleitet.

## Beschreibung

Die Erfindung betrifft ein kombiniertes Bauteil aus Wärmeübertrager und Reaktor gemäß dem Oberbegriff des Patentanspruchs 1.

Die bekannten Wärmeübertrager werden in ihren Anwendungen als z.B. Verdampfer stets als separate Bauteile bereitgestellt. Hierdurch sind hinsichtlich Platzbedarf und Gewicht aufwendige Konstruktionen erforderlich, um den Wärmeübertrager mit z.B. einem Reaktor, welcher das zu behandelnde Produkt erzeugt, zu verbinden. Dadurch wird der Platzbedarf sowie das Gesamtgewicht der einzelnen Bauteile relativ groß, was sich insbesondere für mobile Anwendungen, z.B. im Automobilbereich als nachteilig erweist.

Aufgabe der Erfindung ist es, eine möglichst unaufwendige, Kosten, Gewicht und Platz einsparende Anordnung einer Kombination aus Wärmeübertrager und Reaktor bereitzustellen.

Die Aufgabe wird durch ein kombiniertes Bauteil aus Wärmeübertrager und Reaktor nach den Merkmalen des Patentanspruchs 1 gelöst. Vorteilhafte Ausführungen der Erfindung sind Gegenstand weiterer Unteransprüche.

Gemäß der Erfindung werden der Wärmeübertrager und der Reaktor in einem Bauteil kombiniert, wobei die Platten des Wärmeübertragers im wesentlichen ringförmig ausgebildet sind. Hierbei weist der Wärmeübertrager im wesentlichen senkrecht zu den ringförmigen Platten eine rohrförmige Außenwandung sowie eine rohrförmige Innenwandung auf.

Die rohrförmige Innenwandung umschließt dabei den Reaktor. An der Innenwandung des Wärmeübertragers sind Zuströmöffnungen vorgesehen, durch welche das Produkt des Reaktors in die Strömungsräume des Wärmeübertragers geleitet wird.

In einer möglichen Ausführungsform der Erfindung kann die Außenwandung des Wärmeübertragers Öffnungen zur Abfuhr des durch den Wärmeübertrager geleiteten Reaktor-Produkts aufweisen.

Das durch den Wärmeübertrager geleitete Produkt des Reaktors kann in dieser Ausführungsform vorteilhaft von einem Gehäuse aufgefangen werden, welches den Wärmeübertrager umgibt. In diesem Gehäuse kann das Produkt z.B. gesammelt und anschließend abgeführt werden.

Die Zuführungsöffnungen für das Produkt an der Innenwandung und die Abführungsöffnungen an der Außenwandung des Wärmeübertragers können vorteilhaft benachbart zueinander angeordnet werden, jedoch auf verschiedenen Seiten eines in die ringförmigen Platten angeordneten Entlastungsschlitzes. Durch diese Anordnung der Zufuhr- und Abführungsöffnungen absolviert das Produkt beim Durchlaufen des Wärmeübertragers etwa eine Umdrehung. Die Entlastungsschlitze haben den Vorteil, daß thermomechanische Spannungen im Bauteil reduziert werden können.

Senkrecht zu den Platten des Wärmeübertragers können Zuströmund Abströmleitungen für das zweite, den Wärmeübertrager durchströmende Medium ebenfalls benachbart zueinander angeordnet werden. Der Entlastungsschlitz in den Platten trennt die beiden Leitungen voneinander, so dass das zweite Medium beim Durchlaufen des Wärmeübertragers etwa eine Umdrehung absolviert.

Als zweites Medium kann z.B. ein Wärmeträgermedium oder ein zu kühlendes Medium verwendet werden, um das Produkt des Reaktors zu temperieren.

Auf beiden Seiten der Entlastungsschlitze sind Dichtungsstege angeordnet, wodurch die Strömungsräume gegenüber den Schlitzen abgeschlossen werden.

In einer weiteren möglichen Ausführungsform der Erfindung weist die Außenwandung des Wärmeübertragers eine Ausbuchtung auf. Diese Ausbuchtung kann als Abströmleitung für das Produkt des Reaktors dienen. Somit kann in dieser Ausführungsform auf ein den Wärmeübertrager umgebendes Gehäuse verzichtet werden.

Die Ausbuchtung der Abströmleitung und die Zuführungsleitungen für das Reaktor-Produkt können diametral gegenüberliegen. Somit kann das Produkt beim Durchlaufen des Wärmeübertragers etwa eine halbe Umdrehung absolvieren.

Die Zuström- und Abströmleitung für das zweite Medium können sich diametral gegenüberliegen, so dass das zweite Medium beim Durchlaufen des Wärmeübertragers etwa eine halbe Umdrehung absolviert.

Insbesondere kann eine weitere Zuströmleitung für ein drittes Medium in den Strömungsräumen des Wärmeübertragers angeordnet werden. Diese Zuströmleitung für das dritte Medium kommuniziert mit einem Strömungsraum für eines der beiden Fluide. Dieses dritte Medium kann in dem jeweiligen Strömungsraum z.B. zusätzlich verdampft oder beigemischt werden. Es können jedoch auch separate Strömungsräume für das dritte Medium vorgesehen werden.

In einer vorteilhaften Ausführung der Erfindung kann der Reaktor durch einen Ventilator oder ein Filter ersetzt werden. Der beschriebene Aufbau sowie die Fluidführung im Wärmeübertrager ändern sich dadurch nicht.

Erfindungsgemäß kann der Wärmeübertrager z.B. als Verdampfer ausgebildet sein, wobei das Produkt des Reaktors in den jeweiligen Strömungsräumen des Wärmeübertragers seine Wärme an das zu verdampfende Medium abgibt. Es ist aber auch möglich, den Wärmeübertrager als Kühler einzusetzen, wobei das Produkt des Reaktors in den jeweiligen Strömungsräumen gekühlt wird. In einer anderen Ausführung kann das Produkt des Reaktors zum Temperieren des von außen einströmenden zweiten Mediums eingesetzt werden.

Darüber hinaus kann der Wärmeübertrager in dem kombinierten Bauteil ebenfalls zusätzlich als Reaktor ausgebildet sein, wobei sich innerhalb der Strömungsräume des Produkts ein Katalysatormaterial befindet.

Der Reaktor kann z.B. ein katalytischer Brenner eines Brennstoffzellensystems sein, in den das Anoden- und Kathodenabgas des Brennstoffzellensystems eingeleitet wird, um z.B. den im Abgas enthaltenen Restwasserstoff zu verbrennen.

Ein solches erfindungsgemäßes kombiniertes Bauteil kann in Brennstoffzellensystemen, insbesondere in mobilen Anwendungen eingesetzt werden.

Weitere Vorteile und vorteilhafte Ausgestaltungen der Erfindung gehen aus der folgenden Beschreibung unter Bezugnahme auf Zeichnungen und zwei Ausführungsbeispiele der Erfindung hervor. Es zeigen :
- Fig. 1 :: den Aufbau einer ersten Ausführung eines erfindungsgemäßen kombinierten Bauteils mit Gehäuse,
- Fig. 2 :: die Strömungsführung innerhalb des Wärmeübertragers für das Produkt des Reaktors,
- Fig. 3 :: die Strömungsführung innerhalb des Wärmeübertragers für das zweite Medium,
- Fig. 4 :: den Aufbau einer zweiten Ausführung eines erfindungsgemäßen kombinierten Bauteils ohne Gehäuse,
- Fig. 5 :: die Strömungsführung innerhalb des Wärmeübertragers für das Produkt des Reaktors,
- Fig. 6 :: die Strömungsführung innerhalb des Wärmeübertragers für das zweite Medium mit zusätzlichen Zuströmleitungen für das dritte Medium.

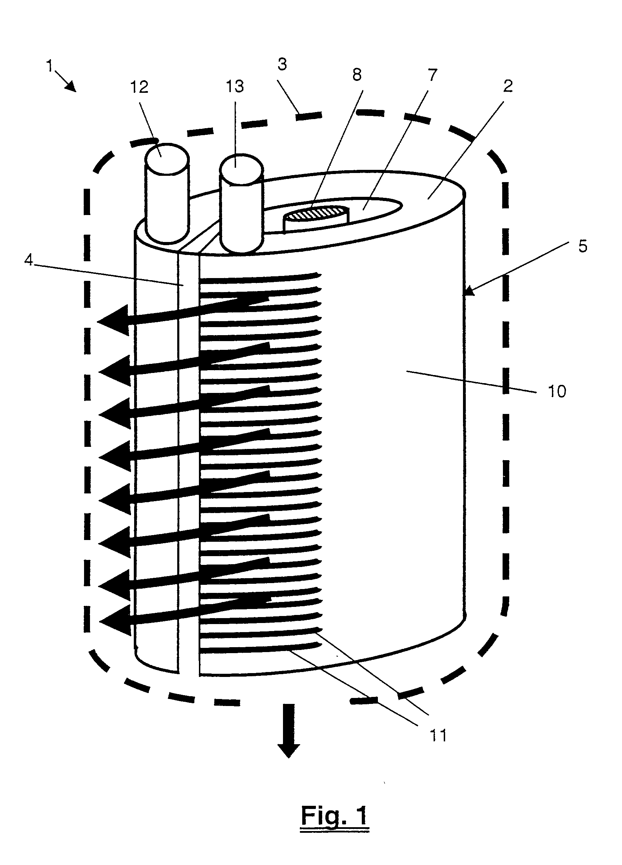

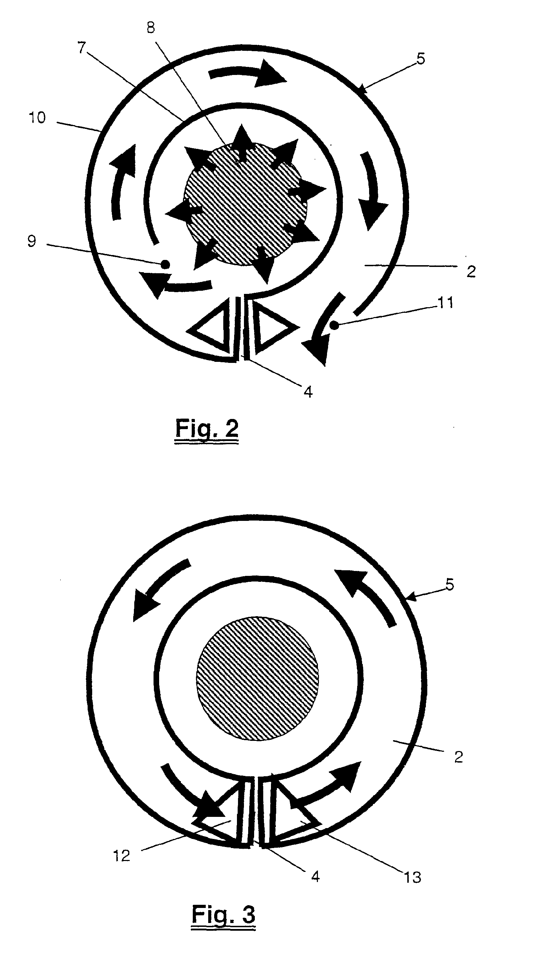

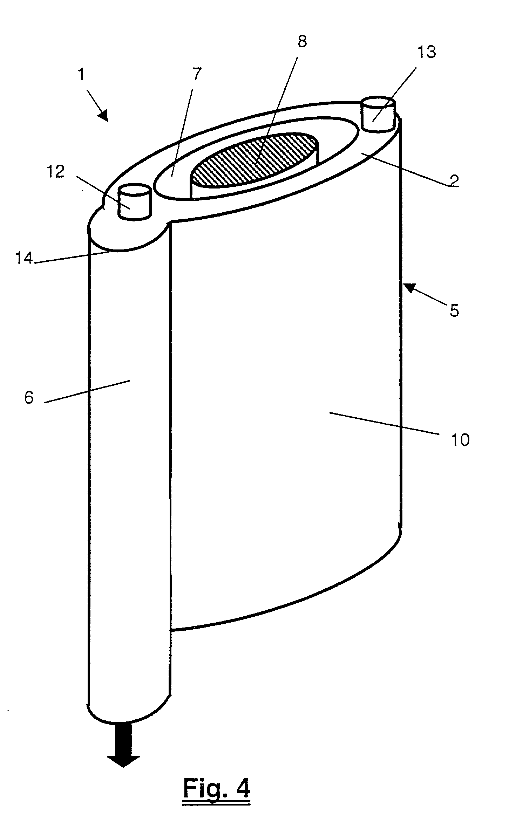

Das in Fig. 1 und Fig. 4 insgesamt mit **1** bezeichnete kombinierte Bauteil umfaßt einen Wärmeübertrager **5** und einen Reaktor **8**, wobei der Wärmeübertrager **5** den Reaktor **8** umschließt. Der Wärmeübertrager **5** besteht aus einer Vielzahl im wesentlichen ringförmigen Platten **2** (Fig. 2,3,5,6). Die verwendeten Platten **2** können z.B. ausgeschnittene oder ausgestanzte kreisförmige Platten sein, wobei auch andere Formen, z.B. elliptisch möglich sind. Durch Stapelung der Platten bilden die Räume zwischen zwei benachbarten Platten **2** jeweils Strömungsräume für das Reaktor-Produkt sowie Strömungsräume für ein zweites Medium. Der Plattenstapel kann z.B. durch Schweißtechnik, Löttechnik oder Preßkraft gedichtet werden. Der Plattenstapel wird üblicherweise durch zwei nicht dargestellte Endplatten abgeschlossen. Der Wärmeübertrager weist eine Innenwandung **7**, welche den Reaktor **8** umgibt, und eine Außenwandung **10** auf. Die Innenwandung **7** und Außenwandung **10** schließen die Strömungsräume des Wärmeübertragers **5** gegen die Umgebung ab.

### Wärmeübertrager mit Gehäuse

Fig. 1 zeigt eine erste Ausführung des erfindungsgemäßen kombinierten Bauteils **1** mit Gehäuse. Der Wärmeübertrager **5** wird durch das Gehäuse **3** nach außen begrenzt, wobei das Gehäuse **3** aus Gründen der Übersichtlichkeit nur gestrichelt angedeutet ist. Die Platten **2** weisen über die gesamte Breite der Platten **2** einen Entlastungsschlitz **4** auf (Fig. 2,3), durch welchen thermomechanische Spannungen reduziert werden können.

Die Innenwandung **7** des Plattenstapels umschließt den Reaktor **8.** Ferner weist die Innenwandung **7** des ringförmigen Plattenstapels Zuführungsöffnungen **9** (Fig. 2) für das Produkt des Reaktors **8** auf, durch welche das Produkt in den Wärmeübertrager **5** gelangt.

Benachbart zu den Zuführungsöffnungen **9** an der Innenwandung **7** und getrennt durch den Entlastungsschlitz **4** sind an der Außenwandung **10** Abführungsöffnungen **11** für das durch den Strömungsraum geleitete Produkt angeordnet. Durch die Anordnung der Zuführungsöffnungen **9** und Abführungsöffnungen **11** absolviert das Produkt im Strömungsraum von Eintritt in den Strömungsraum bis zum Austritt etwa eine Umdrehung.

Getrennt durch den Entlastungsschlitz **4**, erstrecken sich senkrecht durch den Plattenstapel die Zuströmleitung **12** und die Abströmleitung **13** für das zweite Medium, z.B. Luft. Durch die Anordnung der Zuströmleitung **12** und Abströmleitung **13** absolviert das zweite Medium etwa eine Umdrehung vom Eintritt in den Strömungsraum bis zum Austritt. Die beiden Leitungen **12** und **13** können auch vertauscht angeordnet werden, um einen Gleich- bzw. Gegenstrom-Wärmeüberträger darstellen zu können.

Fig. 2 zeigt einen Schnitt senkrecht zur Längsachse des Bauteils **1**, und zwar im Bereich eines Strömungsraums für das Reaktor-Produkt. Man erkennt die Strömungsführung des Reaktor-Produkts innerhalb des Wärmeübertragers **5.** Die Innenwandung **7** weist eine Zuführungsöffnung **9** auf, durch die das Produkt des Reaktors **8** in den Strömungsraum gelangt. Die Außenwandung **10** weist eine zu der Zuführungsöffnung **9** benachbarte Abführungsöffnungen **11** auf, durch welche das Produkt den Strömungsraum verläßt. Ferner weist die ringförmige Platte **2** einen Entlastungsschlitz **4** auf, wodurch die Zuführungsöffnungen **9** und Abführungsöffnungen **11** räumlich voneinander getrennt werden. Das Produkt des Reaktors **8** durchströmt somit in einer fast vollständigen Umdrehung den Strömungsraum vom Eintritt bis zum Austritt.

Fig. 3 zeigt einen Schnitt senkrecht zur Längsachse des Bauteils **1**, und zwar im Bereich eines Strömungsraums für das zweite Medium. Man erkennt die Strömungsführung des zweiten Mediums im Wärmeübertrager **5.** Benachbart zueinander sind eine Zuströmleitung **12** und eine Abströmleitung **13** vorgesehen, welche durch einen Entlastungsschlitz **4** in den ringförmigen Platten **2** getrennt sind. Dadurch wird das zweite Medium auf eine kreisförmige Bahn gezwungen und absolviert somit von Eintritt in den Strömungsraum bis zum Austritt etwa eine Umdrehung. Auch hier können die beiden Leitungen **12** und **13** vertauscht angeordnet werden, um einen Gleich- bzw. Gegenstrom-Wärmeüberträger darstellen zu können.

### Wärmeübertrager ohne Gehäuse

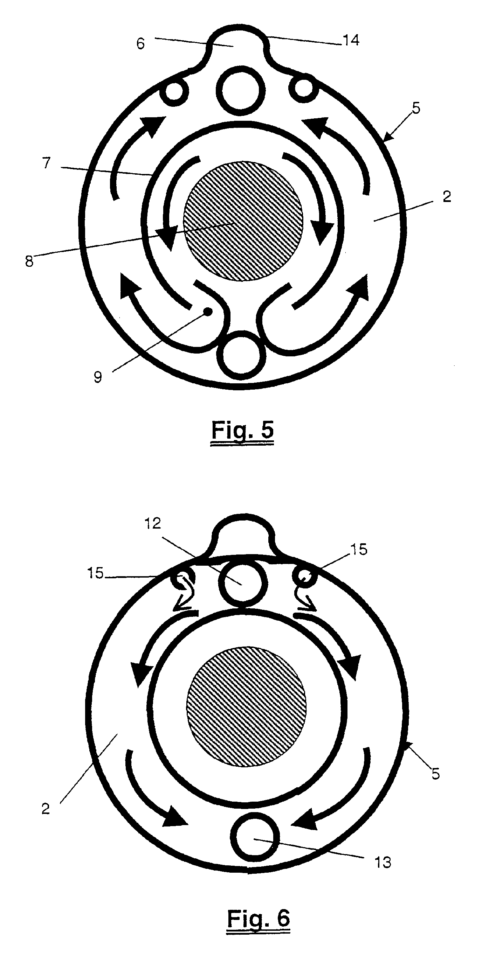

Fig. 4 zeigt eine weitere Ausführung eines erfindungsgemäßen kombinierten Bauteils **1** ohne Gehäuse. Die Innenwandung **7** des Wärmeübertragers **5** umschließt den Reaktor **8.** Ferner weist die Innenwandung **7** des Wärmeübertragers **5** Zuführungsöffnungen **9** (Fig. 5) für das Produkt des Reaktors **8** auf, durch welche das Produkt in den Wärmeübertrager **5** gelangt. Die Außenwandung **10** des Wärmeübertragers **5** weist eines Ausbuchtung **14** auf. Diese Ausbuchtung **14** dient als Abströmleitung **6** des Produkts. Die Zuströmleitung **12** und die Abströmleitung **13** des zweiten Mediums sind sich in den Platten **2** diametral gegenüber angeordnet. Auch hier können die beiden Leitungen **12** und **13** vertauscht angeordnet werden, um einen Gleich- bzw. Gegenstrom-Wärmeüberträger darstellen zu können.

Fig. 5 zeigt einen Schnitt senkrecht zur Längsachse des Bauteils **1**, und zwar im Bereich eines Strömungsraums für das Reaktor-Produkt. Man erkennt den Strömungsverlauf des Produkts des Reaktors **8** innerhalb des Wärmeübertragers **5.** Die Innenwandung **7** weist eine Zuführungsöffnung **9** auf, durch welche das Produkt des Reaktors **8** in den Strömungsraum eintreten kann. Diese Zuführungsöffnung **9** liegt vorteilhaft diametral gegenüber der Ausbuchtung **14.** Die Ausbuchtung **14** bildet die Abströmleitung **6**, durch die das Produkt abgeführt wird. Durch diese Anordnung absolviert das Produkt im Strömungsraum des Wärmeübertragers **5** vom Eintritt bis zum Austritt etwa eine halbe Umdrehung. Auch hier können die beiden Leitungen **12** und **13** vertauscht angeordnet werden, um einen Gleich- bzw. Gegenstrom-Wärmeüberträger darstellen zu können.

Fig. 6 zeigt einen Schnitt senkrecht zur Längsachse des Bauteils **1**, und zwar im Bereich eines Strömungsraums für das zweite Medium. Man erkennt den Strömungsverlauf des zweiten Mediums im Wärmeübertrager **5.** Die Zuströmleitung **12** und die Abströmleitung **13** für das zweite Medium sind diametral gegenüber angeordnet. Somit wird gewährleistet, dass das zweite Medium im Wärmeübertrager **5** etwa eine halbe Umdrehung absolviert. Jeweils benachbart zu der Zuströmleitung **12** sind weitere Zuströmleitungen **15** für ein drittes Medium angeordnet.

Im Betrieb strömt das Produkt eines Reaktors **8** durch die entsprechenden Zuführungsöffnungen **9** an der Innenwandung **7** des Wärmeübertragers **5** in die Strömungsräume. In dem Strömungsraum strömt dann der eine Teil des Produkts halbkreisförmig in Richtung des Uhrzeigersinn und der andere Teil halbkreisförmig entgegen dem Uhrzeigersinn in Richtung der Ausbuchtung **14**, von wo es durch die Abströmleitung **6** abgeführt wird. Das zweite Medium tritt durch die Zuströmleitung **12** in den Strömungsraum ein und wird dort in zwei Strömungsanteile aufgeteilt. Der eine Teil strömt in Richtung des Uhrzeigersinn eine halbe Umdrehung, der andere Teil entgegen des Uhrzeigersinn eine halbe Umdrehung in Richtung der Abströmleitung **13.** Das dritte Medium wird durch weitere Zuströmleitungen **15**, welche beiderseits der Zuströmleitung **12** für das zweite Medium angeordnet sind, in das zweite Medium eingeleitet.

Die in den Fig. 1-6 dargestellte Bauweise ist nur beispielhaft. Es ist auch möglich das dritte Medium in den Strömungsraum des Reaktor-Produkts einzuleiten. Ferner kann die Zuströmleitung **12** und die Abströmleitung **13** vertauscht werden. Ebenfalls ist es möglich in Fig. 4-6 zur Reduzierung von thermomechanischer Beanspruchung Entlastungsschlitze **4** in den Platten **2** vorzusehen.

## Patentansprüche

1. Kombiniertes Bauteil (1) aus einem Wärmeübertrager (5) und einem Reaktor (8), wobei der Wärmeübertrager (5) in Plattenbauweise ausgebildet ist, bei dem zwischen aufeinanderfolgenden Platten (2) abwechselnd Strömungsräume für ein erstes und ein zweites Medium vorhanden sind, **dadurch gekennzeichnet, dass** die Platten (2) des Wärmeübertragers (5) im wesentlichen ringförmig ausgebildet sind, und dass der Wärmeübertrager (5) im wesentlichen senkrecht zu den Platten (2) eine rohrförmige Außenwandung (10) sowie eine rohrförmige Innenwandung (7) aufweist, wobei der Reaktor (8) von der Innenwandung (7) des Wärmeübertragers (5) umschlossen ist, und das Produkt des Reaktors (8) durch Zuführungsöffnungen (9) an der Innenwandung (7) des Wärmeübertragers (5) in die Strömungsräume für eines der beiden Fluide im Wärmeübertrager (5) geleitet wird.

2. Kombiniertes Bauteil nach Anspruch 1, **dadurch gekennzeichnet, dass** die Außenwandung (10) des Wärmeübertragers (5) Öffnungen (11) zur Abfuhr des durch den Wärmeübertrager (5) geleiteten Produkts des Reaktors (8) aufweist.

3. Kombiniertes Bauteil nach Anspruch 2, **dadurch gekennzeichnet, dass** der Wärmeübertrager (5) von einem Gehäuse (3) umgeben ist.

4. Kombiniertes Bauteil nach Anspruch 3, **dadurch gekennzeichnet, dass** die Zuführungsöffnungen (9) an der Innenwandung (7) und die Abführungsöffnungen (11) an der Außenwandung (10) benachbart zueinander angeordnet sind, wobei die Öffnungen (9,11) durch Schlitze (4) in den Platten (2) voneinander getrennt sind, so dass das Produkt des Reaktors (8) beim Durchlaufen des Wärmeübertragers (5) etwa eine Umdrehung absolviert.

5. Kombiniertes Bauteil nach Anspruch 4, **dadurch gekennzeichnet, dass** eine senkrecht zu den Platten (2) verlaufende Zuströmleitung (12, 13) und Abströmleitung (13, 12) für das zweite Medium vorhanden ist, und dass diese Zuströmleitung (12) und Abströmleitung (13) benachbart zueinander liegen, jedoch durch Schlitze (4) in den Platten getrennt (2), so dass das zweite Medium beim Durchlaufen des Wärmeübertragers (5) etwa eine ganze Umdrehung absolviert.

6. Kombiniertes Bauteil nach Anspruch 1, **dadurch gekennzeichnet, dass** die Außenwandung (10) eine Ausbuchtung (14) aufweist, die als Abströmleitung (6) für das Produkt dient.

7. Kombiniertes Bauteil nach Anspruch 6, **dadurch gekennzeichnet, dass** die Ausbuchtung (14) und die Zuführungsöffnungen (9) für das Produkt des Reaktors (8) sich diametral gegenüber auf verschieden Seiten der ringförmigen Platten (2) befinden, so dass das Produkt beim Durchlaufen des Wärmeübertragers (5) etwa eine halbe Umdrehung absolviert.

8. Kombiniertes Bauteil nach Anspruch 7, **dadurch gekennzeichnet, dass** die Zuströmleitung (12, 13) und Abströmleitung (13, 12) für das zweite Medium sich diametral gegenüber auf verschiedenen Seiten der ringförmigen Platten (2) befinden, so dass das zweite Medium beim Durchlaufen des Wärmeübertragers (5) etwa eine halbe Umdrehung absolviert.

9. Kombiniertes Bauteil nach Anspruch 8, **dadurch gekennzeichnet, dass** eine weitere Zuströmleitung (15) für ein drittes Medium vorgesehen ist, die mit einem Strömungsraum für eines der beiden Medien oder separaten Strömungsräumen für das dritte Medium kommuniziert.

10. Kombiniertes Bauteil nach einem der vorangehenden Ansprüche, **dadurch gekennzeichnet, dass** anstatt des Reaktors (8) ein Filter oder Ventilator vorhanden ist.
